# EUROPEAN PATENT APPLICATION

(11) **EP 1 058 199 A2**
(43) Date of publication of application: **06.12.2000**
(21) Application number: 00304278.5
(22) Date of filing: 19.05.2000
(51) Int. Cl.: G06F 17/60

(54) **Internet mail delivery agent with automatic caching of file attachments**

(30) Priority: 04.06.1999 US 325398
(71) Applicant: International Business Machines Corporation, Armonk, NY 10504 (US)
(72) Inventor: Fields, Duane Kimbell, IBM UK Ltd., I.P.L., Winchester, Hampshire SO21 2JN (GB); Hassinger, Sebastian Daniel, IBM UK Ltd., I.P.L., Winchester, Hampshire SO21 2JN (GB); Kolb, Mark Andrew, IBM UK Ltd., I.P.L., Winchester, Hampshire SO21 2JN (GB)
(74) Representative: Burt, Roger James, Dr.

(57) **Abstract**

According to the present invention, e-mail messages are scanned **(32)** for MIME and other file attachments. Such attachments are selectively stripped **(34)** from the messages and stored in an accessible location **(35)**. If desired, the attachment may be compressed prior to storage. A reference (e.g., a link) to the attachment and the location is then substituted **(36)** in the original e-mail, which is then forwarded to the intended recipient **(38)**. When the recipient desires to obtain the attachment, he or she selects the reference **(40)**, preferably from a browser or other rendering engine. The attachment is then decompressed if necessary and served to the recipient.

## Description

This invention relates generally to information delivery in a computer network. More particularly, the invention relates to techniques for removing MIME (Multipurpose Internet Mail Extension) and other attachments from e-mail messages and posting those attachments to a location that is accessible by target e-mail recipients.

### Description of the Related Art

E-mail has become the communication method of choice throughout the business world as well as for the general public. In a typical enterprise environment, a mail server (such as UNIX SendMail) has a local mail delivery agent (typically .../bin/mail on UNIX systems) that stores an incoming e-mail on a local file system and delivers it to an end user via POP, IMAP or a command line program. Such agents only provide the basic functionality of logging in an e-mail message and copying that message to a client machine's mail spool.

Often, a typical e-mail message includes an attachment in the form of a large binary file, usually in a MIME type format such as a sound or movie clip. These large e-mail file attachments frequently cause a number of difficulties upon their receipt at the mail server. Thus, for example, if the e-mail message is addressed to a large number of recipients, the local delivery agent merely inserts a copy of the file into the mailbox of each recipient. This process consumes a significant amount of storage, which is wasteful and causes a significant burden on the file system.

One attempt to address this problem is described in U.S. Patent No. 5,781,901 to Kuzma. In this patent, the e-mail attachments are not delivered to intended recipients. Rather, a sender that desires to transmits an e-mail posts the attachment to a web server that is relatively local to the server. The attachment includes a unique network address. The sender then requests an e-mail option from the recipient, who then provides a configurable e-mail page to the sender in response to the request. The sender then supplies a message and URL pointer in an HTML-based web page that is sent to the recipient. The URL points to the unique network address. The recipient may then retrieve the attachment by navigating to the URL.

While the technique described in Kuzma obviates transmission and storage of multiple e-mail attachments, the technique has several disadvantages. In the first instance, a dedicated server must be positioned to store the attachments, and this server must be located relatively local to the senders to avoid unnecessary network traffic while storing the file attachments. Further, the technique requires that the sender must first browse via a web browser on a home page or other web site of the recipient and then select a "send e-mail" option that must be available from the recipient's home page. If the recipient does not provide this capability, the attachment-by-reference e-mail system described in Kuzma cannot be implemented. Moreover, to use the Kuzma system, the sender must make conscious choice to take advantage of the functionality. Thus, the technique cannot be implemented transparently to the sender, which is disadvantageous.

There remains a need in the art to provide a technique that may be implemented within existing SMTP-based client-server configurations and that obviates storage of multiple copies of e-mail file attachments.

### BRIEF SUMMARY OF THE INVENTION

According to one aspect of the present invention a method for distribution of e-mail attachments, comprises the steps of:
responsive to a request to send an e-mail to one or more recipients, parsing the e-mail for an attachment;
if the e-mail includes an attachment, removing and storing the attachment in a given accessible location;
in the e-mail, substituting a reference to the attachment to produce a modified e-mail;
sending the modified e-mail to the one or more recipients; and
responsive to a request from a recipient using the reference supplied in the modified e-mail, serving the attachment.

According to a second aspect of the present invention a method for distribution of e-mail attachments, comprises the steps of:
responsive to a request to send an e-mail to one or more recipients, parsing the e-mail for an attachment;
if the e-mail includes an attachment, determining whether the attachment satisfies a given criteria;
if the e-mail attachment satisfies the given criteria, removing and storing the attachment in a given accessible location;
in the e-mail, substituting a reference to the attachment to produce a modified e-mail; and
sending the modified e-mail to the one or more recipients.

According to a third aspect of the present invention a server for distributing e-mail attachments, comprises:
a processor;
a storage having a given accessible location;
an e-mail distribution application, comprising:
means responsive to a request to send an e-mail to one or more recipients for parsing the e-mail for an attachment;
   means for removing and storing the attachment in the given accessible location;
   means for substituting a reference to the attachment to produce a modified e-mail;
   means for sending the modified e-mail to the one or more recipients; and
   means responsive to a request from a recipient using the reference supplied in the modified e-mail for serving the attachment.

According to a fourth aspect of the present invention a computer program product in a computer-readable medium for distributing e-mail attachments, comprises:
means responsive to a request to send an e-mail to one or more recipients for parsing the e-mail for an attachment;
means for removing and storing the attachment in the given accessible location;
means for substituting a reference to the attachment to produce a modified e-mail;
means for sending the modified e-mail to the one or more recipients; and
means responsive to a request from a recipient using the reference supplied in the modified e-mail for serving the attachment.

According to a fifth aspect of the present invention a method for distribution of e-mail attachments, comprises the steps of:
responsive to a request to send an e-mail to one or more recipients, parsing the e-mail for an attachment;
if the e-mail includes an attachment, removing the attachment;
compressing the attachment and storing the compressed attachment in a given accessible location;
in the e-mail, substituting a link to the attachment to produce a modified e-mail; and
sending the modified e-mail to the one or more recipients.

According to a sixth aspect of the present invention a method for transmitting e-mail attachments from a sender to a set of one or more recipients, comprises the steps of:
at an e-mail server, responsive to receipt of an e-mail having an attachment, removing the attachment;
storing the attachment at a given URL; and
forwarding the e-mail without the attachment to the set of one or more recipients with a link identifying the URL and a message notifying the recipients that the attachment can be retrieved by selecting the link.

According to embodiments of the present invention, e-mail messages are scanned for MIME or other forms of file attachments. Such attachments are selectively stripped from the messages and cached in an accessible location. If desired, the attachment may be compressed prior to storage. A reference (e.g., a link) to the attachment and the location is then substituted in the original e-mail, which is then forwarded to the intended recipient. When the recipient desires to obtain the attachment, he or she selects the reference, preferably from a browser or other rendering engine. The attachment is then decompressed as necessary and served to the recipient.

Thus, when an e-mail having a large file attachment is delivered to multiple recipients within (or without) an enterprise, preferably only one copy of the file attachment is maintained in the accessible location. This technique substantially reduces the amount of file system storage required when the same attachment is directed to multiple recipients.

Preferably, an administrator-controlled policy is used to determine whether a given attachment is cached. Thus, for example, the policy may depend on the number of recipients for the message having the file attachment, the size of the file attachment, the MIME-type of the file attachment, a given preference for certain types of attachments, a keyword identified in the subject reference of the attachment, the subject of the attachment, or some other policy. If desired, the policy may be customized on a per-user or per-user group basis.

In one preferred embodiment, the inventive method is implemented as a computer program, e.g., as an Internet mail delivery agent, in a mail server. This functionality may be a standalone delivery agent or an add-on to an existing server program.

The foregoing has outlined some of the more pertinent features of the present invention. These should be construed to be merely illustrative of some of the more prominent features and applications of the invention. Many other beneficial results can be attained by applying the disclosed invention in a different manner or modifying the invention as will be described.

### BRIEF DESCRIPTION OF THE DRAWINGS

For a more complete understanding of the present invention and the advantages thereof, reference should be made to the following Detailed Description taken in connection with the accompanying drawings in which, by way of example:
**Figure 1** is a representative SMTP-based client-server system in which the present invention is implemented;
**Figure 2** is a block diagram of the basic operating processes of the Internet mail delivery agent program in accordance with embodiments of the present invention;
**Figure 3** is a flowchart of the basic operation of a delivery agent;
**Figure 4** is an illustration of an e-mail before it is processed by a delivery agent;
**Figure 5** is an illustration of the e-mail of **Figure 4** after it is processed by delivery agent to remove and cache the e-mail attachment;
**Figure 6** is a flowchart of a preferred policy routine of an embodiment of the present invention;
**Figure 7** is a representative user interface by which an administrator may define a caching policy according to an embodiment of the present invention; and
**Figure 8** is a flowchart of a routine that is implemented when a given recipient desires to retrieve a stored file attachment.

### DETAILED DESCRIPTION OF A PREFERRED EMBODIMENT

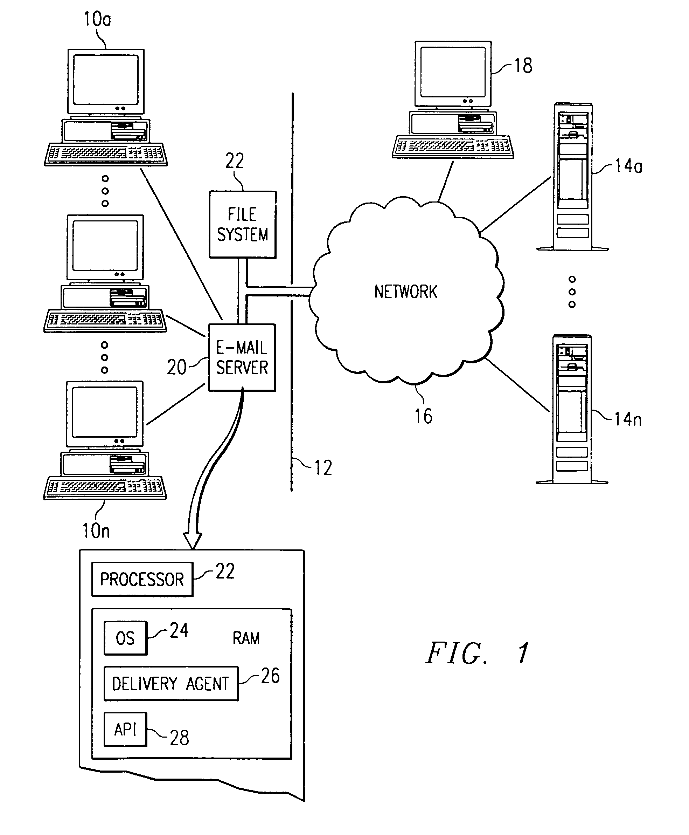

A known Internet client-server system is implemented as illustrated in **Figure 1.** In this system, a set of client machines **10a-10n** are connected behind a network firewall **12** within an enterprise environment. Each client machine has the capability of connecting to a set of web servers **14a-14n** over network **16** in a known manner. Network **16** typically includes other servers for control of domain name resolution, routing and other control functions. The network **16** is the Internet, an intranet, or any other known network. To this end, each client typically includes a suite of programs that enable a user of the client to obtain known Internet services including one-to-one messaging (e-mail), one-to-many messaging (bulletin board), file transfer, and web browsing. Thus, a user of client **18** outside the firewall **12** may communicate with one of the clients **10** inside the firewall. A representative client includes a Simple Mail Transport Protocol (SMTP) e-mail client **18** such as Lotus Notes, Microsoft Outlook, or the like. E-mail clients **10** cooperate with mail server **20** in a known manner. A representative mail server **20** is UNIX SendMail, which includes a local mail delivery agent that stores incoming e-mail on a local file system **21** and delivers it to an end user (e.g., via POP, IMAP or a command line program). In the Internet paradigm, a network path to a resource (e.g., a server) is identified by a so-called Uniform Resource Locator (URL).

A representative mail server **20** is an IBM Netfinity server comprising a RISC-based processor **22**, the AIXÒ operating system **24** and a mail server program **26**. The mail server program is a local mail delivery agent, as previously noted. The server **20** may include an application programming interface (API) **28** that provides extensions to enable application developers to extend and/or customize the core functionality thereof through software programs including plug-ins, servlets, and the like.

A representative client is a personal computer, notebook computer, Internet appliance or pervasive computing device (e.g., a PDA or palm computer) that is x86-, PowerPC®- or RISC-based. The client includes an operating system such as IBM® OS/2®, Microsoft Windows, Microsoft Windows CE or PalmOS. As noted above, the client includes a suite of Internet tools including a Web browser, such as Netscape Navigator or Microsoft Internet Explorer, that has a Java Virtual Machine (JVM) and support for application plug-ins or helper applications. The client also includes an e-mail client, such as Lotus Notes, Microsoft Outlook, or the like, to manage e-mail communications. As will be seen, the existing e-mail client need not be modified to take advantage of the present invention.

As described briefly above, the present invention provides a novel Internet mail delivery agent that removes and caches MIME-type and other attachments to obviate storage of multiple copies of these attachments for a set of intended recipients. In the illustrative embodiment, the Internet delivery agent is a standalone program that replaces the conventional mail server delivery agent (e.g., UNIX/bin/mail). In one particular embodiment of the invention, the delivery agent is implemented as a servlet running on a server. As an alternative, the delivery agent may be implemented as an adjunct to an existing mail server, e.g., as a separate plug-in. Any convenient implementation, of course, may be used.

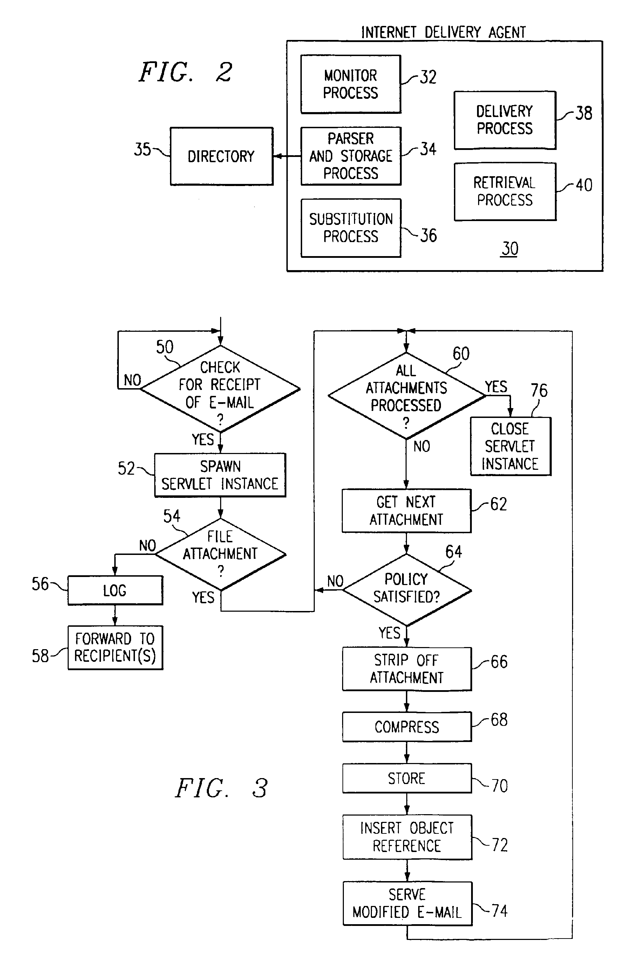

**Figure 2** illustrates the main functional components of the Internet mail delivery agent **30** of the present invention. The agent includes a first process **32** that monitors incoming e-mail for file attachments. A second process **34** parses the file attachments according to a given policy and strips off those attachments that satisfy given criteria of the policy. Thus, for example, one such criteria is that the attachment has a given size or is of a given MIME type. The second process **34** also controls the storing of the removed file attachment at a given location in an accessible store **35**. Although not meant to be limiting, the store **35** may be an LDAP directory having a relational database backing store. Alternatively, the store **35** is a web server. The agent **30** further includes a third process **36** that substitutes an object reference, e.g., a link identifying the URL, an image link including a thumbnail image of the file attachment, or the like, into the e-mail, preferably in the location of the deleted attachment. Third process **36** may also insert a message to instruct the user how to retrieve the stored file attachment. A fourth process **38** delivers the e-mail, modified to include the URL and the message, to the original recipients. A fifth process **40** responds to selection of the URL for retrieving the stored file attachment and serving the attachment to a recipient. The processes, which may or may not be discrete, are preferably supported in random access memory of a computer, namely, the mail server.

As a representative embodiment, each of the processes is a set of instructions that together comprise a computer program. This program, for example, may be implemented in Java as a servlet that is executable in a processor running a given operating system. Alternatively, the program may be written in native code. As is well-known, a Java servlet comprises class files executable in a Java Virtual Machine (JVM). It may be managed by a servlet manager. When necessary, the servlet manager instantiates a new service thread, thereby generating a new instance of the servlet. Each servlet typically comprises three (**3**) basic routines: an init() routine, a destroy() routine, and a service() routine. The init() routine provides initialization functionality. These are the functions that enable the servlet to be recognized and managed by the servlet manager and other server functions. The destroy() routine selectively destroys the servlet, which is an atypical operation. The service() routine provides the basic operating functionality of the servlet. This operation will now be described in the flowchart of **Figure 3**.

The routine begins at step **50** with the servlet manager checking for receipt of e-mail messages. If an e-mail message is received, the routine branches to step **52** to spawn an instance of the servlet process. Thereafter, at step **54**, the instance performs a test to determine whether the e-mail has a file attachment. If not, the servlet process logs the received e-mail at step **56** and forwards the e-mail to the intended recipient's e-mail client at step **58**. This is a conventional e-mail process. If, however, the e-mail has an attachment, the servlet branches to step **60** to test whether all attachments have been processed. If so, the routine returns. If the outcome of the test at step **60** is negative, the servlet instance gets the next attachment at step **62**. At step **64**, a test is run to determine whether the attachment has criteria associated therewith that satisfy a given policy. As will be seen, this policy may be defined by an administrator to determine whether given file attachments are cached according to the present invention. If the outcome of the test at step **64** indicates that the file attachment does not meet the specified criteria, then control returns to step **60** to test for additional attachments. If, however, the outcome of the test at step **64** is positive, the servlet instance processes the attachment in the following manner.

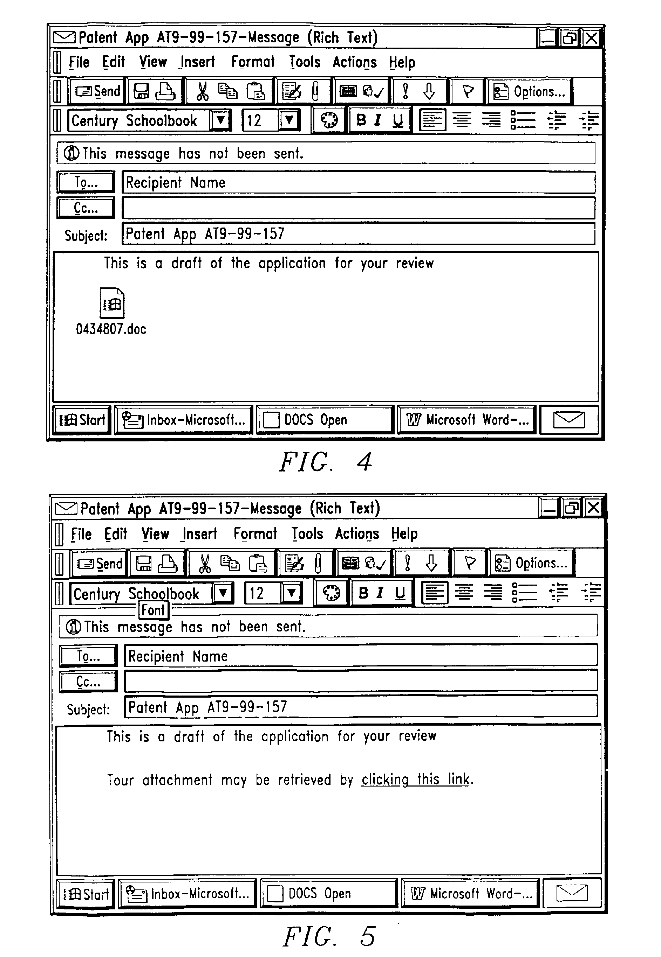

At step **66**, the servlet instance strips or otherwise removes the attachment from the e-mail. At step **68**, the servlet compresses the attachment. Step **68** is optional. At step **70**, the compressed attachment is stored in a given accessible location in the filespace. The routine then continues at step **72** with the servlet process replacing the deleted attachment with a reference to the given accessible location. Thus, for example, step **72** may replace the attachment with a link to the storage location. In a preferred embodiment, the link is a hypertext transfer protocol (http) or file transfer protocol (ftp) reference to the local file system where stored attachments are centrally accessible to the e-mail recipients. **Figure 4** illustrates the e-mail message with the attachment, and **Figure 5** illustrates the e-mail message sans attachment, which includes the substituted reference, e.g., "http://servernamelocalarchive.0434807.doc" within the link. As illustrated, this object reference is identified in a message (viz., "Your attachment may be retrieved by clicking this link") to instruct the target recipient how to obtain the deleted attachment. An alternative object reference may be just a link, an image link that includes a thumbnail representation of the attachment, or any other convenient text, graphical or other object reference.

The servlet routine then continues at step **74** to serve the modified e-mail (i.e. the e-mail with the deleted attachment) to its intended recipient. Thus, at step **74**, the modified e-mail is logged and copies to the intended recipient's client mail spool. Control then returns to step **60**. When all attachments to a given e-mail message have been processed in this manner, the main processing loop is complete. At step **76**, the servlet instance is then closed.

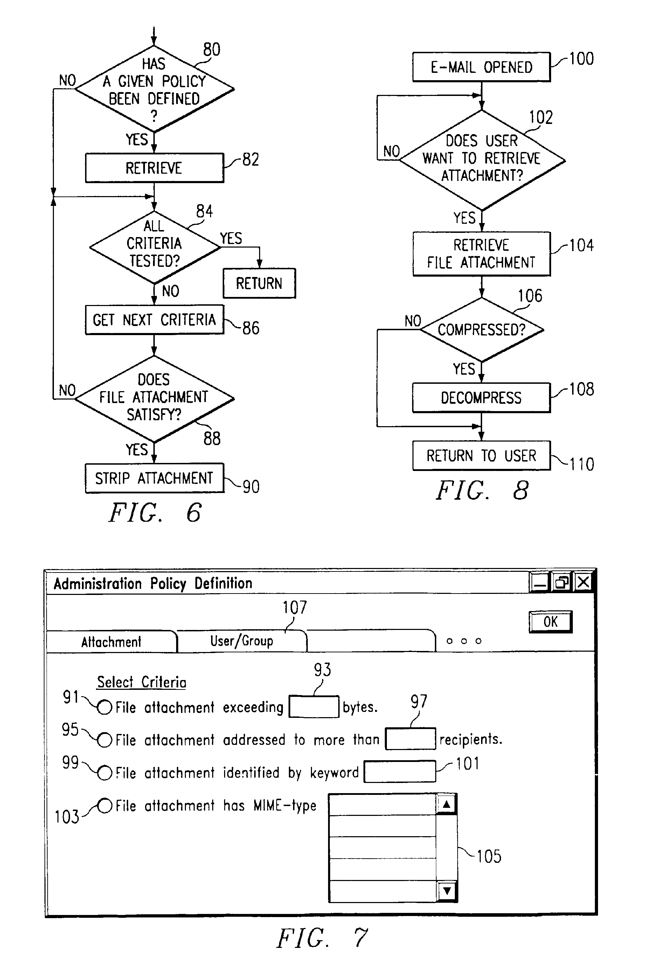

**Figure 6** is a flowchart illustrating how the administrator policy is applied to determine whether the file attachment satisfies the given criteria for being cached. This is step **64** in the flowchart of **Figure 3**. According to the invention, one or more different criteria may be tested. The routine begins at step **80** to test whether a given policy has been defined for the intended recipient (or for a group of recipients for which the intended recipient is a qualifying member). If so, the routine continues at step **82** to retrieve the user-specific (or group-specific) policy. The routine then continues at step **84**. This step is also reached if the outcome of the test at step **80** is negative. At step **84**, the routine tests whether all criteria defined by the policy have been tested. If so, the routine returns. If not, the routine continues at step **86** to get the next criteria. A test is then made at step **88** to determine whether the file attachment satisfies the criteria. Thus, for example, the given criteria may be that the file attachment has a given size, is of a given MIME format, or the like. If the result of the test at step **88** is positive, the routine continues to strip the attachment from the message, as has been previously defined. This is step **90**. If, however, the file attachment does not meet the given criteria, the routine returns to step **84** to obtain the next criteria in the policy. This completes the processing.

**Figure 7** illustrates a simplified user interface that may be used by an administrator to generate an e-mail file attachment caching policy according to the present invention. This interface is merely illustrative. It includes a number of controls that may be selected to determine whether a given file attachment is deleted. Thus, for example, one criteria is that the file attachment is larger than a given size. This control is selected by checking the radio button **91** and entering a file size in the field **93**. Another criteria is that the file attachment is associated with a message directed to more than a given number of intended recipients. This control is selected by checking the radio button **95** and entering a recipient number in field **97**. Yet another criteria is that the message attachment has a given keyword in its subject line. This control is selected by checking radio button **99** and entering a keyword in the field **101**. Still another criteria is that the message attachment has a given MIME-type extension (e.g., x-image/gif). This control is selected by checking radio button **103** and selecting the MIME-type from a listbox **105**. The user interface in **Figure 7** also includes a panel **107** for identifying a user-specific or group-specific selection criteria. Thus, for example, attachments directed to certain users or user types thus may be designated for caching, irrespective of the characteristics of the attachment.

One of ordinary skill in the art will appreciate that a set of criteria may be selectively combined (e.g., with a boolean operator or set of operators) to provide even finer control over the caching process. Thus, for example, the administrator may decide that only file attachments greater than a given size (e.g., 1 Mbyte) and intended for more than a given number of recipients (e.g., 10 users) are cached. As another example, the administrator may decide that only attachments having a given size and directed to users in a given department are cached. Of course, the actual policy may be quite varied as may be suitable for the given system environment.

**Figure 8** illustrates a preferred routine by which a target recipient retrieves the cached file attachment. The routine begins at step **100** when the e-mail served to the recipient's e-mail client is opened. At step **102**, a test is performed to determine whether the user desires to retrieve the previously-deleted and cached file attachment. As noted above, a message instructing the user how to retrieve the attachment may be inserted in the e-mail together with the reference to the location of the attachment in the file system space. If the outcome of the test at step **102** is negative, the routine cycles. If, however, the user has selected the reference, e.g., activated the link, the routine continues at step **104** to retrieve the file attachment. A test is then performed at step **106** to determine whether the file attachment was stored in a compressed manner. If so, the routine continues at step **108** to apply a given decompression routine to obtain the original attachment. At step **110**, which is also reached by a negative outcome to step **106**, the file attachment is returned to the target recipient, who may then open the attachment using local resources. This completes the processing.

Although the present invention is illustrated above in the context of a mail server that controls a set of e-mail clients, this is not a limitation of the present invention. The functionality of the present invention may be implemented anywhere in the network and is not limited to use behind a firewall, as in the representative system.

One of ordinary skill in the art will appreciate that the present invention provides numerous advantages over the prior art. When a given e-mail having a file attachment is intended for multiple recipients, the inventive technique requires that only a single copy of that attachment be made. This functionality significantly reduces the storage requirements for large e-mail attachments. Moreover, the inventive technique provides an efficient method to post file attachments for easy retrieval. Further, if the file attachment is frequently modified, such modifications may be posted at the same unique network address. Users may then be notified of the new version of the attachment using the same URL included in the original modified e-mail. When the users then select the URL (which may be the same as the URL in the old e-mail), the new version of the attachment is served.

In another variation, it may be desired to store file attachments in the central store and then limit access to those attachments to given users. In this manner, some portion (or perhaps all) file attachments are removed from the incoming mail, and a given subset of intended recipients is selectively authorized to retrieve those attachments (e.g., via an access control list) that were directed to those recipients.

As also noted above, it may be desirable to compress file attachments prior to their storage. If this is done, then a corresponding decompression routine is used to decompress the compressed attachment prior to its being served to the intended recipient. One of ordinary skill in the art will appreciate that the particular compression and decompression routines preferably are complementary. The present invention does not require specifying any particular type of compression or decompression routine.

As noted above, the above-described functionality preferably is implemented in software executable in a processor, namely, as a set of instructions (program code) in a code module resident in the random access memory of the computer. Until required by the computer, the set of instructions may be stored in another computer memory, for example, in a hard disk drive, or in a removable memory such as an optical disk (for eventual use in a CD ROM) or floppy disk (for eventual use in a floppy disk drive), or downloaded via the Internet or other computer network.

In addition, although the various methods described are conveniently implemented in a general purpose computer selectively activated or reconfigured by software, one of ordinary skill in the art would also recognize that such methods may be carried out in hardware, in firmware, or in more specialized apparatus constructed to perform the required method steps.

Further, as used herein, a Web "client" should be broadly construed to mean any computer or component thereof directly or indirectly connected or connectable in any known or later-developed manner to a computer network, such as the Internet. The term Web "server" should also be broadly construed to mean a computer, computer platform, an adjunct to a computer or platform, or any component thereof. Of course, a "client" should be broadly construed to mean one who requests or gets the file, and "server" is the entity which downloads the file.

Having thus described our invention, what we claim as new and desire to secure by Letters Patent is set forth in the following claims.

## Claims

1. A method for distribution of e-mail attachments, comprising the steps of:
responsive to a request to send an e-mail to one or more recipients, parsing the e-mail for an attachment;
if the e-mail includes an attachment, removing and storing the attachment in a given accessible location; in the e-mail, substituting a reference to the attachment to produce a modified e-mail;
sending the modified e-mail to the one or more recipients; and
responsive to a request from a recipient using the reference supplied in the modified e-mail, serving the attachment.

2. A method as described in claim 1 further including the step of determining whether the attachment meets a given criteria before removing and storing the attachment.

3. A method for distribution of e-mail attachments, comprising the steps of:
responsive to a request to send an e-mail to one or more recipients, parsing the e-mail for an attachment;
if the e-mail includes an attachment, determining whether the attachment satisfies a given criteria;
if the e-mail attachment satisfies the given criteria, removing and storing the attachment in a given accessible location;
in the e-mail, substituting a reference to the attachment to produce a modified e-mail; and
sending the modified e-mail to the one or more recipients.

4. A method as described in claim 3 further including the step of:
responsive to a request from a recipient using the reference supplied in the modified e-mail, serving the attachment.

5. A method as described in any preceding claim wherein the reference is a link.

6. A method as described in any of claims 1 to 4 wherein the reference includes an inline image of the attachment.

7. A method as described in any of claims 1 to 4 wherein the given criteria is that the number of recipients for the e-mail including the attachment exceeds a given number.

8. A method as described in any of claims 1 to4 wherein the given criteria is that the size of the attachment exceeds a given value.

9. A method as described in any of claims 1 to 4 wherein the given criteria is that the attachment has a given subject.

10. A method as described in any of claims 1 to 4 wherein the given criteria is that the attachment has a given delivery priority.

11. A method as described in any of Claims 1 to 4 wherein the given criteria is that the attachment has a given keyword associated therewith.

12. A server for distributing e-mail attachments, comprising:
a processor;
a storage having a given accessible location;
an e-mail distribution application, comprising:
means responsive to a request to send an e-mail to one or more recipients for parsing the e-mail for an attachment;
means for removing and storing the attachment in the given accessible location;
means for substituting a reference to the attachment to produce a modified e-mail;
means for sending the modified e-mail to the one or more recipients; and
means responsive to a request from a recipient using the reference supplied in the modified e-mail for serving the attachment.

13. A computer program product in a computer-readable medium for distributing e-mail attachments, comprising:
means responsive to a request to send an e-mail to one or more recipients for parsing the e-mail for an attachment;
means for removing and storing the attachment in the given accessible location;
means for substituting a reference to the attachment to produce a modified e-mail;
means for sending the modified e-mail to the one or more recipients; and
means responsive to a request from a recipient using the reference supplied in the modified e-mail for serving the attachment.

14. A server according to claim 12 or a computer program according to claim 13 further including means for determining i whether the attachment satisfies a given criteria.

15. A server according to claim 12 or a computer program according to claim 13 wherein the given criteria is selected from a set of criteria consisting essentially of:
a number of recipients for the e-mail including the attachment exceeding a given number, a size of the attachment exceeding a given value, the attachment having a given subject, the attachment having a given delivery priority, the attachment being associated with a given keyword, a user identity, a user group identity, and combinations of these criteria

16. A method for distribution of e-mail attachments, comprising the steps of:
responsive to a request to send an e-mail to one or more recipients, parsing the e-mail for an attachment;
if the e-mail includes an attachment, removing the attachment;
compressing the attachment and storing the compressed attachment in a given accessible location;
in the e-mail, substituting a link to the attachment to produce a modified e-mail; and
sending the modified e-mail to the one or more recipients.

17. A method according to claim 16 further including the steps of:
responsive to selection of the link by a recipient of the modified e-mail, retrieving the compressed attachment;
applying a given decompression routine to the compressed attachment; and
serving the attachment.

18. A method for transmitting e-mail attachments from a sender to a set of one or more recipients, comprising the steps of:
at an e-mail server, responsive to receipt of an e-mail having an attachment, removing the attachment;
storing the attachment at a given URL; and
forwarding the e-mail without the attachment to the set of one or more recipients with a link identifying the URL and a message notifying the recipients that the attachment can be retrieved by selecting the link.
